# EUROPEAN PATENT SPECIFICATION

(11) **EP 1 939 044 B1**
(45) Date of publication and mention of the grant of the patent: **31.08.2011**
(21) Application number: 07380385.0
(22) Date of filing: 27.12.2007
(51) Int. Cl.: B60R 11/02, B60R 11/00

(54) **Support for removably fixing a navigator on the instrument panel of a vehicle**
Träger zur vorübergehenden Befestigung eines Navigators auf dem Armaturenbrett eines Fahrzeugs
Support pour fixer un navigateur de manière amovible sur le tableau de bord d'un véhicule

(30) Priority: 28.12.2006 ES 200602801 U
(43) Date of publication of application: 02.07.2008
(73) Proprietor: Seat, S.A., 08760 Martorell, Barcelona (ES)
(72) Inventor: Martos Ortega, Antonio c/o Seat, S.A., 08760 Martorell (Barcelona) (ES); Rosello Roig, Nuria c/o Seat, S.A., 08760 Martorell (Barcelona) (ES); Guardia Munuera, Pedro c/o Seat, S.A., 08760 Martorell (Barcelona) (ES); Demers, Marc c/o Seat, S.A., 08760 Martorell (Barcelona) (ES)
(74) Representative: Carvajal y Urquijo, Isabel

(56) References cited:
- EP-A1- 2 086 794
- DE-U1- 20 010 848
- GB-A- 2 339 734
- US-A1- 2002 158 512
- US-B1- 7 062 300

## Description

### Object of the Invention

The present invention relates to a support which has been especially conceived to carry out the fixing, with the possibility of assembling/disassembling, of a portable navigator on the dashboard or instrument panel of an automotive vehicle.

The object of the invention is to achieve a universal support, i.e. valid for the base of any navigator, which support is integrated in said panel and which in an inoperative situation can be covered by means of a cover aesthetically finishing the assembly, and all with a simple and consequently economical structure, since said support is structured by means of two simple parts, a body and a cover, obtained by means of injection molding.

### Background of the Invention

There are multiple supports for PDA-type navigators, virtually as many supports as there are manufacturers of these types of apparatus, the majority of them having as a common denominator an anchoring system for anchoring to the vehicle consisting of a suction cup, in turn fixable to the windshield of the vehicle by means of a lever type system.

Usually the base of the navigator is maintained permanently fixed to the mentioned windshield of the vehicle and it is the navigator strictly speaking which is frequently disassembled to prevent theft, such that the support is exposed and fixed by the suction cup.

This brings with it the problem fundamentally centering on two aspects, on one hand the fixings reduce the visibility of the driver and on the other minor instabilities of the navigator are produced if the fixing does not fulfill minimum quality requirements.

If another fixing system is intended to be used, this system must be specific for each type of vehicle and for each navigator.

A support showing the features of the preamble of claim 1 is known from US-B-7 062 300.

### Description of the Invention

The support which the invention proposes according to claim 1 fully and satisfactorily solves the problems previously set forth in the different mentioned aspects, offering a universal character, i.e. it can be applied to any type of navigator, assuring perfect stability for the latter and being integrated in the instrument panel, such that its effect on the aesthetics of the vehicle is practically null in an inoperative situation as will be seen below, and all with very simple structural features having a positive effect at the cost level.

To that end and more specifically said support is formed, as has been said previously, by means of combining a base body and a cover, the base body being made on a ring that can be embedded in an opening operatively made in the panel, said ring also being fixed, in addition to the panel, to the air duct which is located below the panel to which the ring is fixed by means of screwing and having means to indistinctly fix the base of the navigator in a use situation, or a cover closing and protecting said ring and optimizing the aesthetics of the instrument panel when the navigator is removed therefrom, which cover also prevents pollution and dirt from entering the inner or rear area of the panel.

This new situation for the navigator and the reduced volume of the device eliminate the visibility problems for the driver whereby passive safety is improved, the windshield wipers being completely clear and without there being a lure tending to put the vehicle in danger in the event that the user of the vehicle has left the navigator in the glove compartment.

The mentioned arrangement of the support allows achieving the interior design standards of the vehicle since obviously and in an inoperative situation the cover provides continuity with the panel, not interfering aesthetically with the rest of the environment.

### Description of the Drawings

To complement the description being made and for the purpose of aiding to better understand the features of the invention according to a preferred practical embodiment thereof, a set of drawings is attached as an integral part of said description in which the following has been shown with an illustrative and non-limiting character:
Figure 1 shows a perspective view of the ring or base body participating in the support for removably fixing a navigator on the instrument panel of a vehicle forming the object of the present invention.
Figure 2 shows another perspective view of the same ring in which the lower side part of the ring is observed.
Figures 3 and 4 respectively show a plan view and an elevational view of the ring of the previous figures.
Figure 5 shows a diametric sectional view of the ring of the previous figures, duly coupled to the instrument panel of the vehicle and on it the base of the navigator shown with a dotted line.

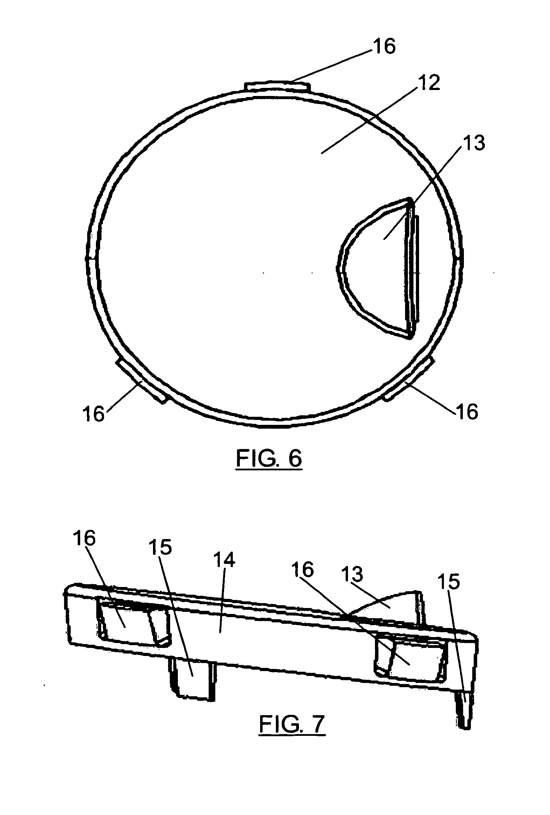

Figures 6 and 7 respectively show a plan view and a side elevational view of the complementary cover of the ring or base body of the previous figures.

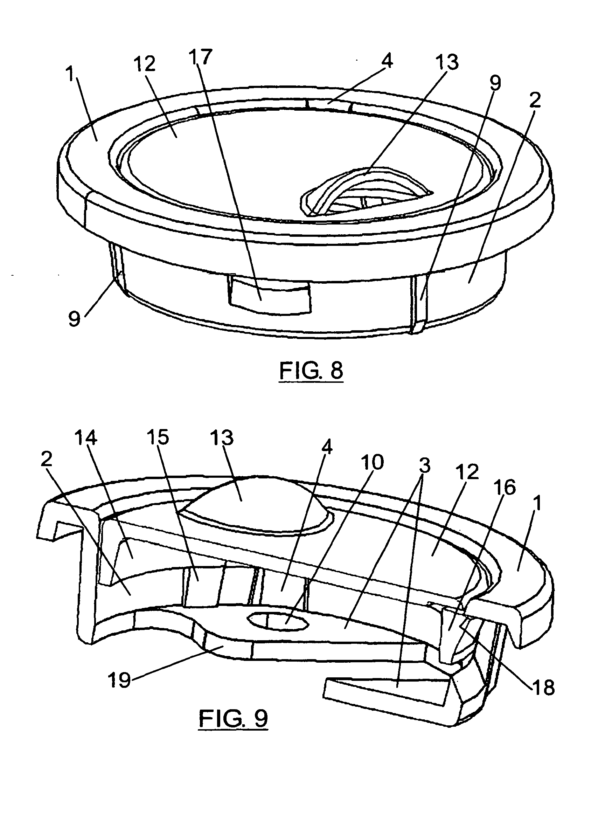

Figure 8 again shows a perspective view of the assembly formed by the base body and the cover duly assembled.
Figure 9 shows a perspective view of the assembly of the previous figure diametrically sectioned.

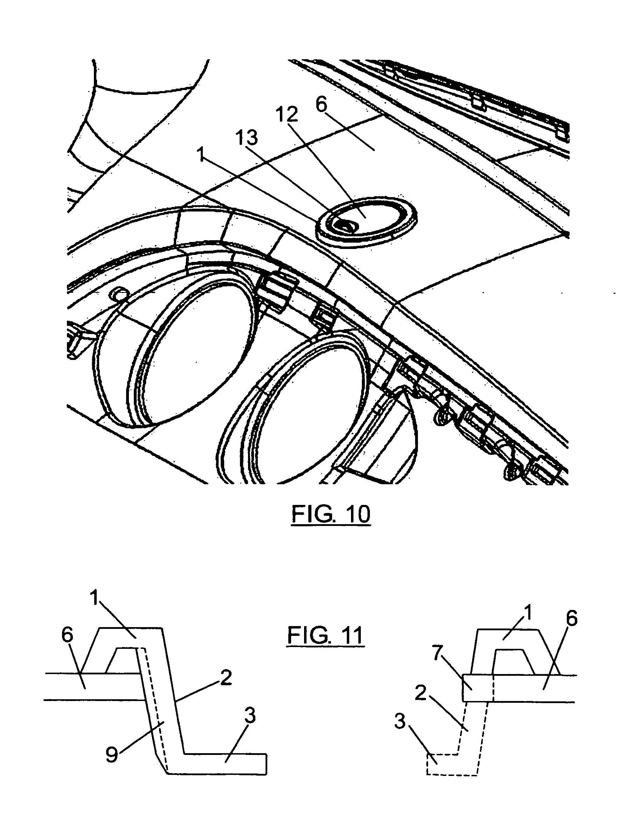

Figure 10 shows a partial perspective view of the instrument panel of an automotive vehicle on which the support of the invention is implemented.
Figure 11 finally shows a sectional detail of the base body of Figure 2 according to the section line A-A of said figure.

### Preferred Embodiment of the Invention

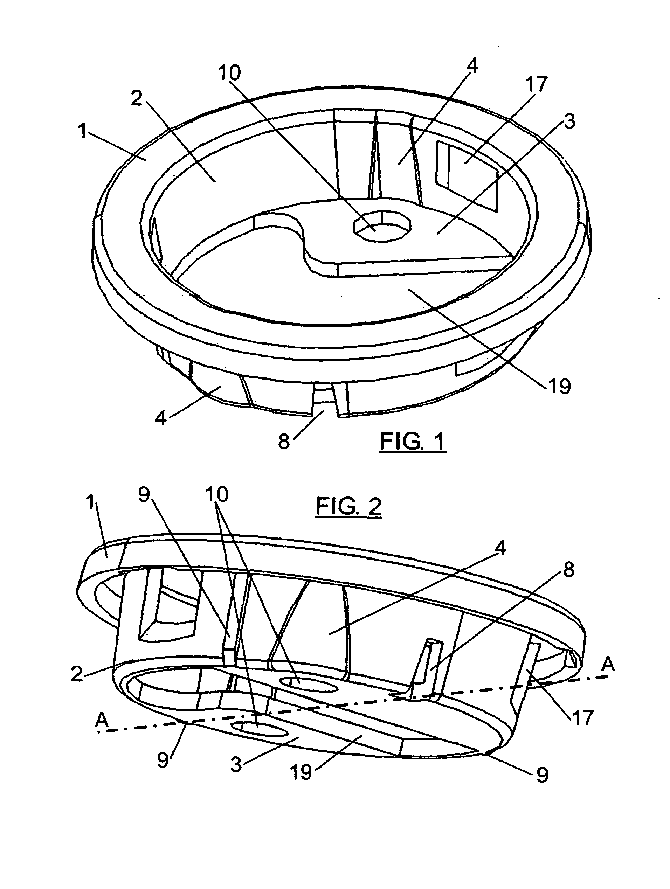

In view of the figures indicated it can be observed how the support being proposed is formed from a base body shown in detail in figures 1 to 4, forming a type of receptacle provided with a ring (1) at the level of its inlet acting as a penetration limiting stop in the opening of the instrument panel, a ring (1) extended in a cylindrical body (2) the bottom (3) of which is mainly open as will be seen below.

The cylindrical body (2) has a pair of preferably cylindrical and diametrically opposite slits (4) serving to fix the base (5) of the navigator to said base body.

To fix the support on the panel (6) of the vehicle, a hole is made in the vehicle with a diameter coinciding with that of the central body (2) and provided with a small flange providing a unique angular positioning for the base body with regard to the panel upon making a notch (8) provided in the side wall of the support coincide with said flange, i.e. in the central body (2).

Additionally this central body (2) has three ribs (9) pressing against the panel (6) and leaving the support well fixed.

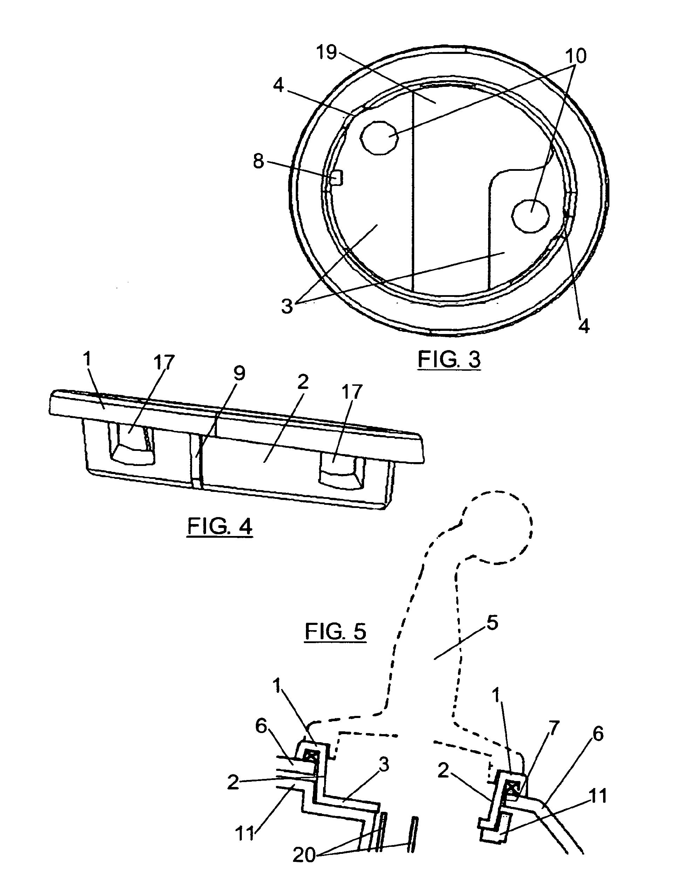

This connection can be insufficient to support the base (5) and accordingly to securely support the navigator, therefore a pair of holes (10) have been provided in the bottom (3) of the base body which allow fixing the support to the air duct (11) of the vehicle as shown in Figure 5, for example by means of clamps and screws.

The base body described is complemented with a cover (12) for loading and unloading thereof.

This cover (12) has a projection or finger notch (13) to facilitate extracting such cover, it is provided with a perimetral skirt (14) intended to penetrate the base body (2) approximately affecting half the height thereof, said skirt extending in ribs (15) as support stops on the base (3) of the support body acting as penetration limiters of the cover inside said support body.

Additionally the cover incorporates three fixing wedges (16) on the outer face of its skirt (14) intended to fit in respective through grooves (17) of the base body(2).

These fixing wedges (16) have a bevel (18) corresponding to the edge of such wedges which make contact with the upper part of the through grooves (17) in order to make extracting the cover easier and thus prevent any of such fixing wedges (16) from breaking especially during the cover extraction maneuver.

On the base or bottom (3) of the receptacle forming the support body, in addition to the previously mentioned holes (10) for fixing to the air duct (11), a through groove (19) has been provided in which a connector (20) fits in order to be able to connect any complementary device.

According to this structuring the support which is proposed allows arranging the navigator directly on the instrument panel by means of its classic base (5), and when the navigator is removed during periods such navigator is not used, the support strictly speaking is concealed by means of the complementary easy-open cover acting as a beauty enhancer of the panel and preventing dirt from entering the interior thereof.

## Claims

1. A support for removably fixing a navigator on the instrument panel (6) of a vehicle, comprising
a base body (2) to be integrated in the instrument panel (6) through an opening of the panel comprising fixing means for fixing the base body (2) to the panel (6) in a preestablished position and means to fix the base (5) of the navigator to the base body (2) having a side wall,
and a cover (12), comprising coupling means for coupling to the base body (2) in an inoperative situation of the support
**characterized in that** the base body (2) is a cylindrical base body (2) and comprises two diametrically opposed slits (4) on its side wall for fixing the base (5) of the navigator on it.

2. A support for removably fixing a navigator on the instrument panel of a vehicle according to claim 1, **characterized in that** the base body has a notch (8) on its side wall (2) intended to receive a flange (7) emerging from the edge of the opening of the panel determining a predetermined positioning of the support with regard to the instrument panel (6).

3. A support for removably fixing a navigator on the instrument panel of a vehicle according to the previous claims, **characterized in that** the base body incorporates on its side wall (2) ribs (9) through which is presses on the hole of the panel (6) for its own fixing, said base body further incorporates on its bottom (3) a pair of holes (10) for fixing thereof to the air duct (11) of the vehicle, preferably by means of clamps and screws and a through groove is provided between said holes, in which groove a connector (20) fits for the connection of any device.

4. A support for removably fixing a navigator on the instrument panel of a vehicle according to the previous claims, **characterized in that** the cover (12) is provided with a projection or finger notch (13) to facilitate the manual actuation thereof, and incorporates a perimetral skirt (14) intended to penetrate in the base body until a limit situation defined by ribs (15) or extensions which in an assembly situation are supported on the bottom (3) of the receptacle forming the base body

5. A support for removably fixing a navigator on the instrument panel of a vehicle according to claim 5, **characterized in that** the cover (12) incorporates on the outer face of its skirt several wedges (16) fitting in through grooves (17) of the side wall of the base body(2), said wedges have their beveling edge (18) to facilitate their penetration and extraction from the respective through grooves.

## Patentansprüche

1. Eine Halterung für die lösbare Befestigung eines Navigator an das Armaturenbrett eines Fahrzeuges,
bestehend aus einem Grundkörper (2) der im Armaturenbrett (6) über eine Öffnung im Brett integriert ist, wobei die Öffnung über Mittel zur Befestigung des Grundkörpers (2) an das Brett (6) in einer vorgegebenen Position verfügt, und über Mittel zur Befestigung der Auflage (5) des Navigators an den Grundkörper (2), der über eine Seitenwand verfügt,
und eine Abdeckung (12), die über Koppelungsmittel verfügt zur Verbindung mit dem Grundkörper (2) bei einer Situation in der die Halterung nicht verwendet wird,
**dadurch gekennzeichnet, daß** der Grundkörper (2) ein zylinderförmiger Grundkörper (2) ist und zwei diametral gegenüberliegenden Vertiefungen (4) an der Seitenwand umfasst zur Befestigung der Auflage (5) des Navigators.

2. Eine Halterung für die lösbare Befestigung eines Navigator an das Armaturenbrett eines Fahrzeuges, nach Patentanspruch 1, **dadurch gekennzeichnet, dass** der Grundkörper auf der Seitenwand (2) eine Kerbe (8) aufweist die entworfen ist um eine aus der Öffnung des Brettes hervorschauende Lasche (7) aufzunehmen und auf die Art eine vorgegebenen Position der Halterung in Beziehung zum Armaturenbrett (6) bestimmt.

3. Eine Halterung für die lösbare Befestigung eines Navigator an das Armaturenbrett eines Fahrzeuges, nach den vorhergehenden Ansprüchen, **dadurch gekennzeichnet, dass** der Grundkörper an seiner Seitenwand (2) Rippen (9) aufweist über die er auf die Öffnung des Brettes (6) eine Kraft für die eigene Befestigung ausübt, dieser Grundkörper umfasst ausserdem auf der Unterseite (3) Öffnungen (10) für die Befestigung an den Luftkanal (11) des Fahrzeuges, bevorzugterweise, über Schrauben und Schellen, dass sich zwischen diesen Öffnungen eine Nut befindet in die ein Stecker (20) passt, um ein beleibiges Gerät anzuschließen.

4. Eine Halterung für die lösbare Befestigung eines Navigator an das Armaturenbrett eines Fahrzeuges, nach den vorhergehenden Ansprüchen, **dadurch gekennzeichnet, dass** die Abdeckung (12) über einen Vorsprung oder Sperrfinder (13) für die Erleichterung deren Handbetrieb verfügt, und eine umlaufende Schürze (14) umfasst, die entworfen ist um in den Grundkörper bis zu einer vorgegebenen, durch die Rippen (15) bestimmte Grenze hineinzuragen, oder über Verlängerungen verfügt, in denen sie in einer Motagesituation an ihrer Unterseite (3) der den Grundkörper bildenden Aufnahme getragen werden.

5. Eine Halterung für die lösbare Befestigung eines Navigator an das Armaturenbrett eines Fahrzeuges, nach Anspruch 5, **dadurch gekennzeichnet, dass** die Abdeckung (12) an der Außenseite der Schürze mehrere Keile (16) umfasst, die in die durchgehenden Nuten (17) der Seitenwand des Grundkörpers (2) passen, wobei diese Keile einen abgeschrägten Rand (18) aufweisen um die Einführung und Entnahme aus den jeweiligen durchgehenden Nuten zu erleichtern.

## Revendications

1. Support pour fixer de manière amovible un navigateur sur le tableau de bord (6) d'un véhicule, comprenant :
un corps de base (2) destiné à être intégré sur le tableau de bord (6) à travers une ouverture du tableau de bord comprenant des moyens de fixation pour fixer le corps de base (2) au tableau de bord (6) dans une position préétablie et des moyens pour fixer la base (5) du navigateur au corps de base (2) qui a une paroi latérale,
et un couvercle (12) comprenant des moyens d'assemblage pour être monté sur le corps de la base (2) dans une position non-opérationnelle du support.
**caractérisé en ce que** le corps de base (2) est un corps à base cylindrique et comprend deux fentes diamétralement opposées (4) sur sa paroi latérale pour y fixer la base (5) du navigateur.

2. Support pour fixer de manière amovible un navigateur sur le tableau de bord d'un véhicule selon la revendication 1, **caractérisé en ce que** le corps de base a une encoche (8) sur sa paroi latérale (2) conçue pour recevoir une bride (7) qui ressort de la bordure de l'ouverture du tableau de bord, formant un positionnement préétabli du support par rapport au tableau de bord (6).

3. Support pour fixer de manière amovible un navigateur sur le tableau de bord d'un véhicule selon les revendications précédentes, **caractérisé en ce que** le corps de base incorpore sur sa paroi latérale (2) des nervures (9) à travers lesquelles il est pressé sur l'orifice du tableau de bord (6) pour sa propre fixation, ce corps de base incorporant également sur sa partie inférieure (3) deux orifices (10) pour le fixer au conduit d'air (11) du véhicule, de préférence au moyen d'attaches et de vis et **en ce qu'**une rainure est formée entre ces orifices, dans laquelle une pièce de connexion (10) est ajustée pour y raccorder tout dispositif.

4. Support pour fixer de manière amovible un navigateur sur le tableau de bord d'un véhicule selon les revendications précédentes, **caractérisé en ce que** le couvercle (12) est doté d'une projection ou d'un onglet (13) pour faciliter son action manuelle, et incorpore une collerette périphérique (14) conçue pour pénétrer dans le corps de base jusqu'à une situation limite définie par des nervures (15) ou des extensions qui sont supportées, dans une situation d'assemblage, sur la partie inférieure (3) du réceptacle formant le corps de base.

5. Support pour fixer de manière amovible un navigateur sur le tableau de bord d'un véhicule selon la revendication 5, **caractérisé en ce que** le couvercle (12) incorpore sur la partie externe de sa collerette plusieurs coins (16) encastrés dans ces rainures (17) de la paroi latérale du corps de base (2), ces coins ayant leur bord biseauté (18) pour faciliter leur pénétration et leur retrait des rainures respectives.
